# EUROPEAN PATENT SPECIFICATION

(11) **EP 2 203 903 B1**
(45) Date of publication and mention of the grant of the patent: **10.06.2015**
(21) Application number: 07825316.8
(22) Date of filing: 09.10.2007
(51) Int. Cl.: G07D 7/00, G07D 7/12

(54) **SECURITY MARKING AUTHENTICATION DEVICE**
SICHERHEITSMARKIERUNGS-AUTHENTIFIKATIONSEINRICHTUNG
DISPOSITIF D'AUTHENTIFICATION À MARQUAGE DE SÉCURITÉ

(43) Date of publication of application: 07.07.2010
(73) Proprietor: SICPA HOLDING SA, 1008 Prilly (CH)
(72) Inventor: DECOUX, Eric, 1753 Matran (CH); CALLEGARI, Andrea, 1022 Chavannes-Prés-Renens (CH)
(74) Representative: Hoffmann Eitle
(86) International application number: PCT/IB2007/003002
(87) International publication number: WO 2009/047579

(56) References cited:
- EP-A- 1 628 147
- WO-A-2004/011273
- DE-A1-102005 030 287
- DE-A1-102005 030 288

## Description

### Field of invention

The invention is in the field of the authentication of a document or item. It concerns a device for the visual authentication of the presence, on said document or item, of a circular polarizing security marking. Said device is based on a special light source comprising circular polarizing filters.

### State of the Art

In the field of value document certification or identity control, authentication of the document is often required. Authentication is establishing or confirming something or someone as appertaining to a certain class, with the help of a determined feature (security element, marking) which is indicative of said appertaining.

The present invention discloses an authentication device, used to authenticate a document or item carrying a circular polarizing security marking, which can be printed or coated using an ink or coating composition comprising circular polarizing particles, or applying a laminate or film (foil) having circular polarizing properties.

Throughout the present description, the term "authentication device" designates a device which is used to authenticate a document or item comprising a circular polarizing security marking.

According to the invention, the circular polarizing properties are preferably embodied by a cholesteric liquid crystal polymer (CLCP). Such polymer selectively reflects one of both circular polarized light components; that means that within a determined wavelength range, light having a determined circular polarization state (left- or right-handed, depending on the polymer) is predominantly reflected.

Cholesteric liquid crystal materials are characterized by an internal helical supramolecular texture, which causes a periodic modulation of the refractive index, wherein the periodicity is comparable with the wavelength of visible light. As a consequence, such materials act as optical diffraction gratings and reflect light of particular wavelengths, appearing colored to the eye. The helical sense of the texture (right or left) causes light of one circular polarization state to be predominantly reflected (cf. J.L. Fergason, "Cholesteric Structure - I Optical Properties", in "Molecular Crystals", Vol 1, pp 293-307 (1966)). Cholesteric liquid crystal materials have been proposed as coloring means in US 3,766,061.

To achieve color properties which are stable in time and independent of the temperature, it is advantageous to "freeze" the cholesteric helical texture by chemical cross-linking, i.e. by polymerizing the liquid crystal material in the desired state, hereby obtaining a cholesteric liquid crystal polymer (CLCP). Photo-polymerized cholesteric liquid crystal materials have been disclosed in GB2166755A. Pigments made of cholesteric liquid crystal polymer are disclosed in EP 0 601 483 A1; such pigments can be used in coating compositions and as a security marking. WO 94/22976 A1 and WO 95/08786 A1 are particularly directed to such coatings and security markings. Further documents relevant in this context are DE 44 18 490 A1, EP 0 685 749 A1, WO 97/30136 A1, US 6,597,426, EP 0 887 398 A1, US 6,570,648, WO 00/47694 A1, DE 199 22 158 A1, US 6,641,874, WO 2005/105473 A1, and WO 2006/063926 A1.

An authentication device for the machine-detection of security markings comprising cholesteric liquid crystal material is disclosed in DE 102 11 310 A1. According to this document, the marking is illuminated using one or several spectrally restricted light sources, e.g. 'color' light emitting diodes, and the light reflected by the marking is checked by a detecting unit for the presence of circular polarization. The device is not enabled, however, for the visual authentication of cholesteric liquid crystal markings.

According to the prior art, the visual authentication of a circular polarizing security marking on a document or item is performed under "ambient light" with the help of left- and right-circular polarizing filters, comparing the respective aspects of the marking as seen through the left- and through the right-circular polarizing filter, respectively. This method gives satisfactory results only as long as the illuminating light is of good spectral quality. In many circumstances the ambient light level is furthermore low (less than 50 lux, e.g. at night outdoors events, nocturnal identity controls, etc.), which does not facilitate the authentication operation.

WO 2004/011273 A discloses a method whereby a difference image is generated from two images taken of a security element, using right- and left-circular polarising filters and which is used to check the authenticity of the security element and a device for carrying out the above method.

DE 10 2005 030288 A1 discloses a method concerning activating banknotes (BN) which are to be verified using light, and determining the light produced by activation of the banknotes. A change of polarization of the light derived from the banknotes is determined based on the determined light, where the change is caused by the banknotes.

Yet further, EP 1 628 147 A1 discloses an object identification medium having two filters for each one of two opposite circular polarizations of light. However, light needs to pass each filter twice for producing a visual appearance that allows for authentication. However, visual observation of light directly reflected from a so-called discrimination medium cannot serve for authentication.

### Summary of the invention

The present invention discloses an authentication device for the easy visual authentication of a document or item comprising a circular polarizing security marking.

The mentioned objects are attained by the subject-matter of the independent claims. Further preferred embodiments are defined in the dependent claims.

In an important aspect of the present invention, the authentication device comprises a special light source, able to emit left- and right-circular polarized light. This light source is characterized in that it produces two beams of light which have opposite circular polarization handedness (i.e. a left-circular and a right-circular polarized beam) and which are separated, either in space or in time.

Specifically, an authentication device is provided for the visual authentication of a document or item comprising a circular polarizing security marking comprises thus at least one light source, and at least one circular polarizing filter, preferably selected from the group consisting of the left-circular and the right-circular fixed polarizing filters, and of the mechanical and the electro-optic variable circular polarizing filters, characterized in that said device emits left- and right-circular polarized light for the illumination of said marking on said document.

In an embodiment, two continuous, preferably adjacent beams of light of opposite circular polarization, having about the same intensity, simultaneously illuminate zones of the document or item comprising the circular polarizing marking. In a preferred version of this embodiment, the said zones of the document are adjacent, so as to facilitate the comparison of the appearance of the marking under both types of polarized light.

In the context of the present description, illuminated zones of the document refers to areas which are actually illuminated by the light beams, and not to featured areas preexisting on the document.

The visual appearance of the circular polarizing marking changes as a function of the polarization handedness of the incident light. The document or item can thus be authenticated by passing the light beam of the authentication device over the marking, respectively changing the polarization handedness of the light beam, and visually observing the appearance / change in appearance of the marking under each type of polarized light, if necessary comparing it to the appearance / change in appearance of a certified authentic marking under the same conditions.

A more quantitative assessment of the polarized light reflected by the marking, although this more quantitative assessment is not claimed alone, may also be done with the help of an appropriate photoelectric detector (e.g. a photodiode) with the optional assistance of further optical elements (lenses, filters, etc...), and of a corresponding automated processing of the measured detector signal by a processing device.

### Detailed description

The authentication device according to the present invention comprises a special light source that emits circular polarized light. The device comprises at least one circular polarization filter, and may in particular be a modified light pen, a modified flashlight, or a particularly designed authenticity validator device, so as to assure portable application.

An important aspect of the present invention consists in the user of a Light-Emitting Diode (LED) as a light source. White and 'color'-LEDs are currently proposed by number of suppliers (Philips, Nichia, etc...) as high efficiency light sources for portable applications. White LEDs emit light all over the visible spectral domain (i.e. 400nm - 700nm). 'Color'-LEDs emit light in a particular, narrow wavelength range - about 50nm large - in the UV, visible or IR spectral domain.

LED efficiencies can be as high as 150 lumen/W of electric power, i.e. more than 10 times the efficiency of an incandescent lamp. This results in a 10 times increased autonomy, compared to a light bulb, which is an essential advantage for portable application, where autonomy is required. Typical operating conditions for white LEDs in flashlights and light torches vary from 20 mA at 3,2 to 3,6 V (for 25 to 30 cd light output) to up to 1A (for more than 100 lumen light output).

The choice of a LED in the present invention allows thus to obtain an important advantage over the prior art, because i) the light source, and hence the illumination conditions of the marking, are precisely defined and remain the same for all authentications made with the device, and ii) the autonomy of the authentication device at continuous use can be up to one week, compared to less than one day for an incandescent lamp, using a set of classic commercial AAA batteries.

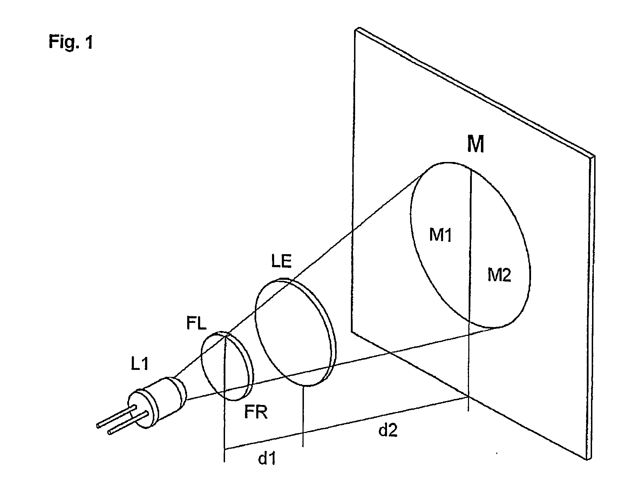

In a first embodiment of the authentication device, with reference to Fig. 1, a split right / left circular polarizing filter (FL, FR), composed of two semicircular filter plates, and disposed in front of a single white light source L1, is used to obtain two adjacent beams of light of opposite circular polarization, simultaneously illuminating adjacent zones (M1, M2) of the marking (M). A positive lens or Fresnel lens (LE) may be optionally part of the authentication device. The lens is disposed between the polarization filters and the marking, at distances d1, d2, respectively, from the filters and the marking, so as to form an image of the filters in the plane of the marking. In this way, two neatly separated, adjacent zones of oppositely polarized illumination on the marking are obtained. The filters are disposed totally inside the authentication device, which comprises L1, FL/FR and LE, inside a same containment.

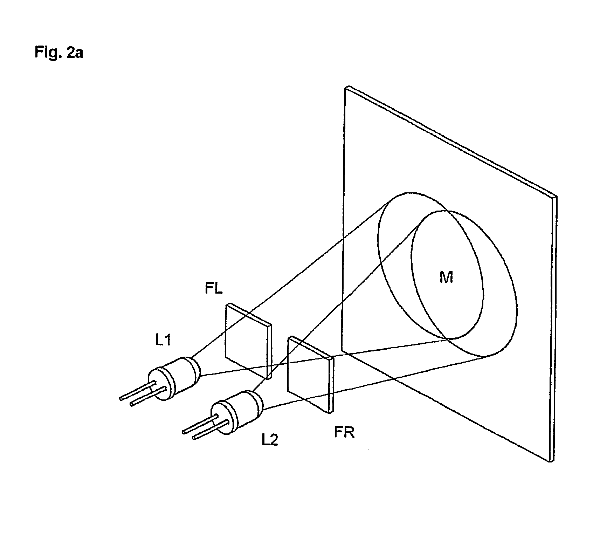

In a second embodiment of the authentication device, with reference to **Fig. 2a****,** two white light sources (L1, L2), having left (FL) and right (FR) polarizing filters, respectively, are switched on and off in an alternating way, illuminating the marking (M) with alternating left and right circular polarized light.

The alternating circular polarization of the light, as known to the skilled person, can also be achieved in other ways, one of them being a mechanical changing of either handedness filters, or of filter handedness. This latter can, e.g. be accomplished by a rotating polarization filter component, i.e. a rotating lambda/4 plate in front of a static linear polarizing filter, or by a rotating linear polarizing filter behind a static lambda/4 plate. Mechanical polarization changing allows the use of a single light source, yielding the same, well-defined characteristics for both, the left- and the right- circular polarized illumination. This is particularly true in the case of a rotating filter component.

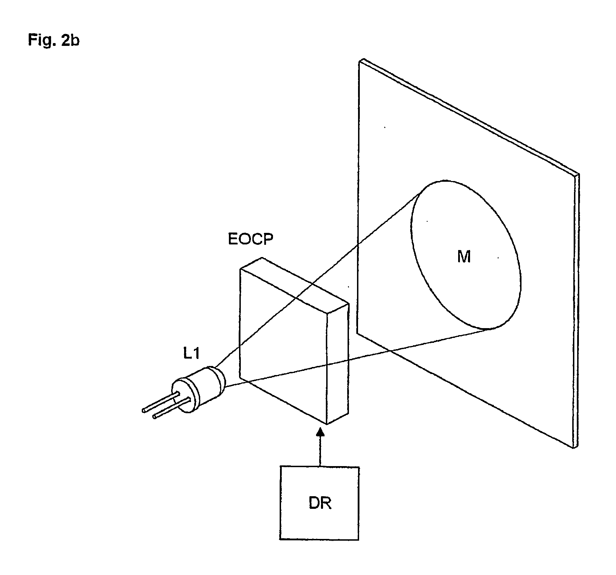

In a modification of the second embodiment, with reference to **Fig. 2b****,** instead of a pair of left and right circular polarizing filters, a single electro-optic circular polarizer (EOCP), as described in DE 102 11 310, in conjunction with a single white light source (L1) is used to generate the alternating left and right circular polarized illumination of the marking (M). The electro-optic circular polarizer (EOCP) is connected to an electric driver unit (DR) controlling the polarization state (left- or right-circular) of the EOCP.

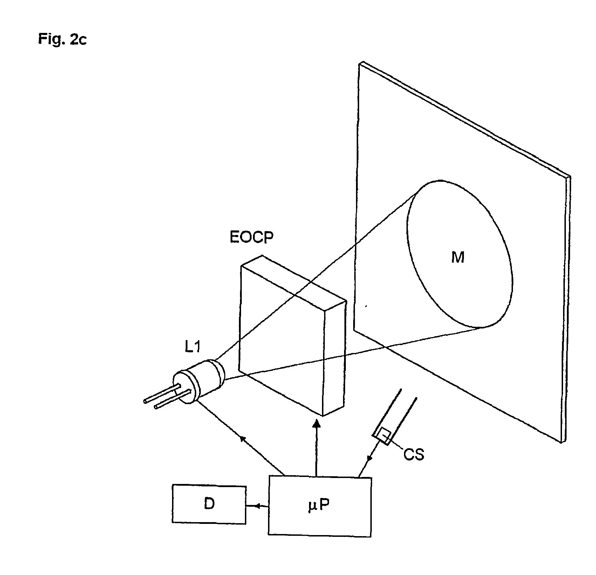

In still another modification of the second embodiment, applicable to both versions outlined above, and with reference to **Fig. 2c****,** a photoelectric cell (photocell), in particular a color sensor (CS), is used to determine the intensity of the light reflected by the marking (M). The signal of the color sensor is treated by a microprocessor (µP), which also switches on and off the light sources (L1, L2), respectively drives the electro-optic circular polarizer (EOCP), and which evaluates the reflected light intensity and color as a function of the selected illumination conditions, as well as of predefined internally stored reference values, and puts out an authentication result at a display (D). The result can indicate either the simple presence or absence of a circular polarizing material, or also give additional information about the color of said polarizing material.

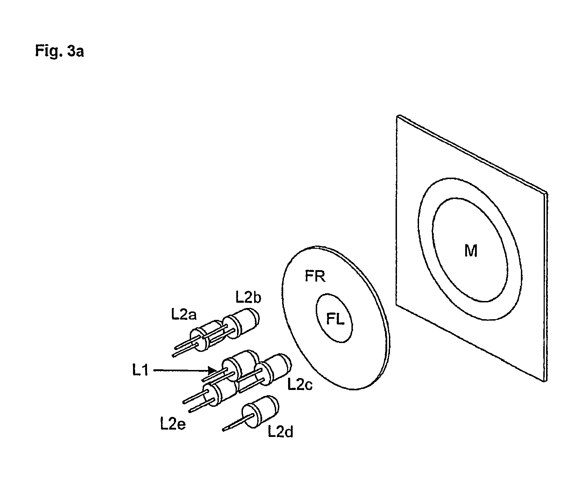

In a further embodiment, with reference to **Fig. 3a****,** a first white light source (L1), having a left circular polarizing filter (FL), is disposed on the optical axis of the authentication device, and a plurality of (i.e. at least two) second white light sources (L2a, L2b,... ), having right circular polarizing filters (FR), are disposed around the said first light source (L1). The polarization filters may be embodied as concentric plates (FL, FR), and the order of the polarizing filters may also be reversed. An optional lens may be present in the beam path, but preferably, each of the light sources (L1, L2a, L2b, ...) has its own, individual lens for shaping its light output into a beam.

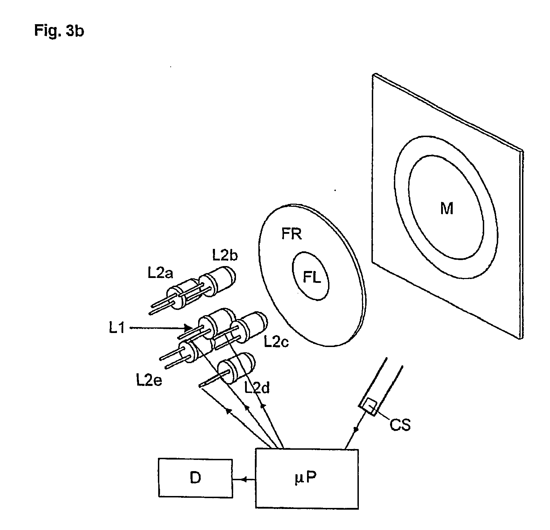

In operation, the first light source and the plurality of second light sources are alternatively switched on and off, illuminating the marking with alternative beams of left and right circular polarized light of preferably the same light intensity. The present embodiment can, as outlined above, and with reference to **Fig. 3b****,** furthermore be associated with a photoelectric cell (photocell), in particular a color sensor (CS), a microprocessor (µP), and a display (D), for the automated determination and evaluation of the intensity and color of the light reflected by the marking.

The light sources used in the embodiments outlined above can furthermore be chosen as spectrally selective light sources, such as 'color'-LEDs, emitting light in a particular, narrow wavelength range - about 50nm large - in the UV, visible or IR spectral domain, or laser diodes (LD) of determined wavelengths.

In a fourth embodiment, with reference to **Fig. 3a****,** a first white light source (L1), having a first polarization filter (FL), and a plurality of different second, spectrally selective (color) light sources (L2a, L2b, ... ) having second polarization filters (FR), are used in conjunction with each other. In a variant of this embodiment, the first light source can also be a spectrally selective light source.

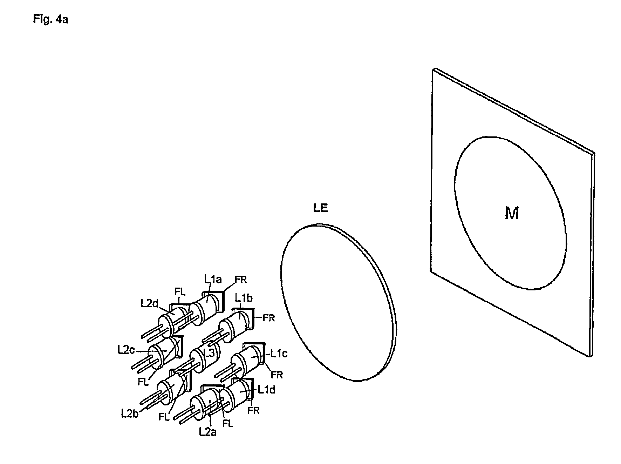

In still another embodiment, with reference to **Fig. 4a****,** a plurality of first, different spectrally selective (color) light sources (L1a, L1b, ... ) having first polarization filters (FR), and a plurality of second, different spectrally selective (color) light sources (L2a, L2b, ... ), having second polarization filters (FL), are used in conjunction with each other.

In operation, the light sources are alternatively switched on and off, and the effect of illuminating the marking (M) with light of left- and right-circular polarization of different color can be visually judged. A lens (LE) may be optionally present, to focus the light onto the marking (M). A further, unpolarized white light source (L3) may also be provided to illuminate the marking under normal reading conditions.

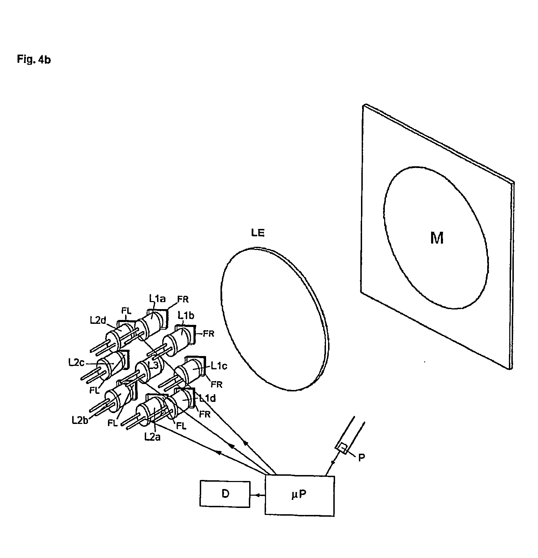

In an alternative version of the embodiment, according to **Fig. 4b****,** a simple photoelectric cell (photocell) (P) is used to determine the intensity of the light reflected by the marking for the different colors and polarizations. The signal of the photocell is treated by a microprocessor (µP), which switches on and off the light sources (L1a, L1b..., L2a, L2b..., L3), and which evaluates the reflected light intensity as a function of the selected illumination conditions, as well as of predefined internally stored reference values, and which puts out an authentication result at a display (D).

Throughout this invention, the circular polarizing filters can also be combined with color filters, to select determined spectral domains.

The illumination strength on the marking (M) at working distance is preferably not less than 50 Lux, more preferably not less than 500 Lux. The working distance is noteworthy defined as the distance at which the authentication device should be placed from the document or item to inspect the marking under optimal conditions. In embodiments using simultaneous illumination or adjacent beams, the working distance is the distance at which an image of the polarization filters is obtained in the plane of the marking. The working distance is chosen, depending on the embodiment, between 1cm and 20cm, more preferably between 2cm and 10cm.

The authentication device may noteworthy also be laid out as an automated Yes/No validator comprising, in addition to the polarized light source, a photocell (P), with optional filters, a processor (µP), control switches and a display device (D), to put out the result of the automated authentication. A firmware embedded in the said microprocessor (µP) provides the functionalities of automatically: switching on/off the LEDs, reading out the signal from the photocell (P), processing and storing the read out signal values, deriving an authentication result, and displaying the authentication result.

The preferred embodiment of the authentication device is a small, lightweight, handy and robust device.

In a preferred embodiment, the authentication device has the form of an elongated cylinder or bar, preferably having a length of the order of 10 cm. Inside the cylinder or bar, which preferably has a cross section of the order of 1 to 5 square centimeters, are disposed: the light sources, the filters, and optional further optical elements, together with the battery serving as the power supply, and, if required, the control electronics and logic. The required switches and indicators, serving as the user interface, are disposed ergonomically at the back end and/or the outer surface of the cylinder or bar; the light output being through its front end.

In a further preferred embodiment, the authentication device is made from a material of the group consisting of the plastic materials, the stainless steels, aluminum and the aluminum alloys; preferably the whole device does not weigh more than 100g.

The invention is now further illustrated with the help of figures and exemplary embodiments.
- **Fig. 1:**: schematically depicts an authentication device according to the present invention, comprising a single white light source (L1) and two semicircular left- and right-circular polarizing filters (FL, FR}, and an optional lens (LE), to produce two adjacent zones (M1, M2} of simultaneous opposite circular polarized, continuous illumination on a marking (M), for the assisted visual authentication of said marking.
- **Fig. 2:**: schematically depicts authentication devices according to the present invention, for the alternate illumination of a marking (M) with opposite circular
polarized light:
**a)** using first and second white light sources (L1, L2), in conjunction with first and second left-and right-polarizing filters (FL, FR), for the assisted visual authentication of a marking (M);
**b)** using a single white light source (L1), in conjunction with an electro-optic circular polarizer (EOCP) and a driver unit (DR), for the assisted visual authentication of a marking (M);
**c)** using one of the embodiments a) or b) with an additional color sensor (CS), a microprocessor (µP) and a display (D), for the automated authentication of a marking (M).
- **Fig. 3**: schematically depicts an alternative authentication device according to the present invention, for the alternate illumination of a marking (M) with opposite circular polarized white light:
**a)** using a single first white light source (L1), having a first circular polarizing filter (FL), and a plurality of second white light sources (L2a, L2b,... ), having second circular polarizing filters (FR), disposed around the first light source (L1), for the assisted visual authentication of a marking (M);
**b)** using an additional color sensor (CS), a microprocessor (µP) and a display (D), for the automated authentication of a marking (M).
- **Fig. 4**: schematically depicts an alternative authentication device according to the present invention, for the alternate illumination of a marking (M) with opposite circular polarized colored light:
**a)** using a plurality of first, different spectrally selective (color) light sources (L1a, L1b, ... ) having first polarization filters (FR), and a plurality of second, different spectrally selective (color) light sources (L2a, L2b, ... ), having second polarization filters (FL), and optionally a third, unpolarized white light source (L3), and optionally a lens (LE), for the assisted visual authentication of a marking (M);
**b)** using an additional photocell (P), a microprocessor (µP) and a display (D), for the automated authentication of a marking (M)

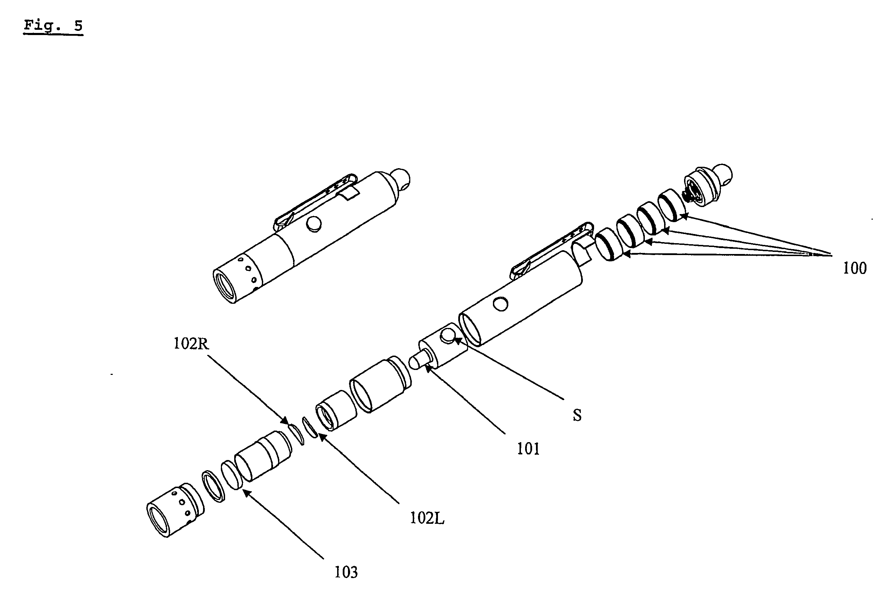

- **Fig. 5:**: shows an exploded view of a first embodiment of an authentication device according to the present invention: the device is a modified flashlight, comprising, in a cylindrical aluminum housing, a lens (103), semicircular left- and right-polarizing filters (102L, 102R), a white light source (101), an on-off switch (S), as well as batteries (100), the device producing two adjacent, continuous, opposite circular polarized beams of light on a document under test.

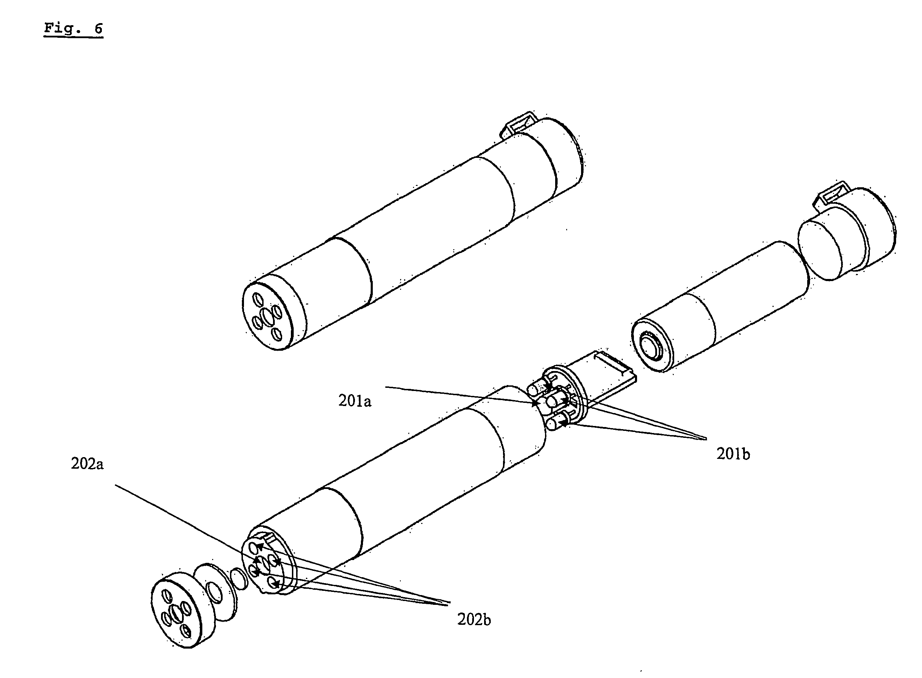

- **Fig. 6:**: shows an exploded view of a second embodiment of an authentication device according to the present invention: the device is a modified flashlight comprising, in a cylindrical aluminum housing, a first white light source (201a) having a first polarization filter (202a), surrounded by four second white light sources (201b) having second polarization filters (202b), the device producing alternate opposite circular polarized illumination on a document under test.

### Exemplary embodiments

With reference to **Fig. 5****,** in a first embodiment, used for the assisted visual authentication, light is provided by a LED **(101)** (a white LED, B5B-430-JB, Roithner, Vienna) and focused onto the marking by a lens **(103)** (304.OM.3 plastic lens, diameter 16.5 mm, f. 1. +30mm). Between the LED and the lens are disposed two semicircular circular-polarizing filters **(102L, 102R)** of opposite handedness (left and right, respectively). The distance between the filters and the lens was chosen such that an image of the filters is formed on the opposite side of the lens at 5 cm distance, where the item or document carrying the marking is positioned for inspection. This renders visible the separation line between the simultaneously illuminated areas of opposite polarization, which are in this way properly defined. A mask can additionally be placed on the filters so as to project a logo or a text, instead of just a plain beam. The whole device was embodied in an aluminium cylinder, 80mm long and 14mm in diameter. In addition to its convenience and compactness, this device offers the advantage that the filters are concealed inside a device, which otherwise looks like a normal light pen; hence, an outside observer does not necessarily realize what kind of special properties of the item or document are being checked.

The use of an LED light source provides the device with an important autonomy, the battery is a simple AAA battery such as sold on the market.

With reference to **Fig. 6****,** in a second embodiment, also used for the assisted visual authentication, light is provided by five LEDs **(201)** (Roithner Vienna) a first one (a white LED, B5B-430-JB) located on the optical axis, the other four (a blue LED B5B-437-IX 470nm, a green LED B5B-433-20 572 nm, a red LED B5B-435-TL 625 nm and IR LED LED850-04VP 850 nm) in a tight ring around the said first LED. The first LED is provided with a circular polarizing filter of right handedness **(202)** and the other four LEDs are provided with each a circular polarizing filter of left handedness (i.e. opposite to the first one) **(203).** The inner and outer diodes are alternatively switched on and off at regular time intervals, such that the item under inspection is alternately illuminated with left polarized and right polarized light. The number and the arrangement of the diodes in the device are not critical, as long as the two sets illuminate the area of interest with similar intensities. The whole device was embodied in an aluminium cylinder, 100mm long and 18mm in diameter.

The authentication device of the present invention can be used for the authentication of currency, value papers, vouchers, identity documents, access documents, event tickets, transportation tickets, tear-tapes, product labels, or packaging materials.

A method of visual authentication of a document or item comprising a circular polarizing security marking is characterized by the steps of:
**a)** illuminating said marking on said document using a device according to the present invention, emitting left- and right-circular polarized light ;
**b)** visually judging the light reflected by the said marking, hereby authenticating the document or item.

In a variant of the method, preferably adjacent zones of the document or item comprising the circular polarizing marking are simultaneously illuminated by two beams of light of opposite circular polarization.

In another variant of the method, the document or item comprising the circular polarizing marking is illuminated by a single light beam of alternating circular polarization.

In still another variant of the method, the light source is selected from the group consisting of the white Light-Emitting Diodes (white-LEDs) and the 'color' Light-Emitting Diode (color-LEDs).

The examples and figures given in the present description are illustrative only and shall not be construed as limiting the scope of the invention in any way.

## Claims

1. Authentication device for the visual authentication of a document or item comprising a circular polarizing security marking (M), said device comprising:
at least one light source (101; 201a, 201b),
**characterized in that** either
a) said device has two circular polarizing filters (102L, 102R) of opposite polarizations and is operable to produce simultaneously two beams of light of opposite circular polarizations to form two adjacent illumination zones (M1, M2) of opposite circular polarizations simultaneously on the circular polarizing security marking (M), or, alternatively,
b) said device has polarization means for producing alternating opposite circular polarization and is operable to produce a single beam of light of alternating opposite circular polarization to form an illumination zone with alternating left and right circular polarized light on the circular polarizing security marking (M);
thereby allowing a user to visually judge, without additional equipment, the light reflected by the security marking under each type of circular polarized light for authenticating the document or item, and wherein the authentication device has the shape of an elongated cylinder or bar with a cross section of the order of 1 to 5 square centimeters.

2. Authentication device according to claim 1, wherein the light source is selected from the group consisting of white Light-Emitting Diodes and color Light-Emitting Diodes.

3. Authentication device according to one of claims 1 to 2, wherein a positive lens (LE) or Fresnel lens (LE) is used to concentrate the light of the light source onto the document or item.

4. Authentication device according to one of claims 1 to 3, wherein the illumination strength at working distance on the marking (M) is not less than 50 Lux, more preferably not less than 500 Lux.

5. Authentication device according to one of claims 1 to 4, wherein the authentication device is made from a material of the group consisting of the plastic materials, the stainless steels, aluminum and the aluminum alloys.

6. Method of visual authentication of a document or item comprising a circular polarizing security marking (M),
**characterized by** the steps of:
illuminating said marking (M) on said document or item by means of a device according to one of the claims 1 to 5, emitting left- and right-circular polarized light, either by emitting
a) simultaneously two beams of light of opposite circular polarization to form two adjacent illumination zones (M1, M2) of opposite circular polarizations simultaneously on the circular polarizing security marking (M); or, alternatively, by emitting
b) a single beam of light of alternating opposite circular polarization to form an illumination zone with alternating left and right circular polarized light on the circular polarizing security marking (M); and
visually judging, without additional equipment, the light reflected by the security marking under each type of circular polarized light, hereby authenticating the document or item.

## Patentansprüche

1. Authentifikationseinrichtung für die visuelle Authentifikation eines Dokuments oder eines Gegenstands, die eine zirkular polarisierende Sicherheitsmarkierung (M) umfassen; wobei die Einrichtung umfasst:
mindestens eine Lichtquelle (101; 201a, 201b),
**dadurch gekennzeichnet, dass** entweder
a) die Einrichtung zwei zirkular polarisierende Filter (102L, 102R) entgegengesetzter Polarisationen aufweist und betreibbar ist, gleichzeitig zwei Strahlen von Licht entgegensetzter zirkularer Polarisationen zu produzieren, um gleichzeitig zwei benachbarte Beleuchtungszonen (M1, M2) entgegensetzter zirkularer Polarisationen auf der zirkular polarisierenden Sicherheitsmarkierung (M) zu bilden, oder alternativ
b) die Einrichtung Polarisationsmittel zum Produzieren von wechselweise entgegensetzter zirkularer Polarisation aufweist und betreibbar ist, einen einzigen Strahl von Licht wechselweise entgegensetzter zirkularer Polarisation zu produzieren, um eine Beleuchtungszone mit wechselweise links und rechts zirkular polarisiertem Licht auf der zirkular polarisierenden Sicherheitsmarkierung (M) zu bilden;
wodurch einem Benutzer ermöglicht wird, ohne zusätzliche Ausrüstung visuell das von der Sicherheitsmarkierung unter jedem Typ von zirkular polarisiertem Licht reflektierte Licht zum Authentifizieren des Dokuments oder des Gegenstands zu beurteilen, und
wobei die Authentifikationseinrichtung die Gestalt eines länglichen Zylinders oder Stabs mit einem Querschnitt in der Größenordnung von 1 bis 5 Quadratzentimetern aufweist.

2. Authentifikationseinrichtung nach Anspruch 1, wobei die Lichtquelle aus der aus weißen Leuchtdioden und Farb-Leuchtdioden bestehenden Gruppe ausgewählt wird.

3. Authentifikationseinrichtung nach einem der Ansprüche 1 bis 2, wobei eine positive Linse (LE) oder Fresnel-Linse (LE) verwendet wird, um das Licht der Lichtquelle auf dem Dokument oder Gegenstand zu konzentrieren.

4. Authentifikationseinrichtung nach einem der Ansprüche 1 bis 3, wobei die Beleuchtungsstärke auf der Markierung (M) beim Arbeitsabstand nicht kleiner als 50 Lux, mehr bevorzugt nicht weniger als 500 Lux beträgt.

5. Authentifikationseinrichtung nach einem der Ansprüche 1 bis 4, wobei die Authentifikationseinrichtung aus einem aus der folgenden Gruppe ausgewählten Material besteht: Kunststoffmaterialien, Edelstählen, Aluminium und Aluminiumlegierungen.

6. Verfahren zur visuellen Authentifikation eines Dokuments oder Gegenstands, die eine zirkular polarisierende Sicherheitsmarkierung (M) umfassen,
**gekennzeichnet durch** die folgenden Schritte:
Beleuchten der Markierung (M) auf dem Dokument oder dem Gegenstand mittels einer Einrichtung nach einem der Ansprüche 1 bis 5, die links und rechts zirkular polarisiertes Licht emittiert,
entweder **durch** Emittieren
a) von zwei Strahlen von Licht entgegensetzter zirkularer Polarisation gleichzeitig, um gleichzeitig zwei benachbarte Beleuchtungszonen (M1, M2) entgegensetzter zirkularer Polarisationen auf der zirkular polarisierenden Sicherheitsmarkierung (M) zu bilden; oder alternativ **durch** Emittieren
b) eines einzigen Strahls von Licht wechselweise entgegensetzter zirkularer Polarisation, um eine Beleuchtungszone mit wechselweise links und rechts zirkular polarisiertem Licht auf der zirkular polarisierenden Sicherheitsmarkierung (M) zu bilden; und
visuelles Beurteilen, ohne zusätzliche Ausrüstung, des von der Sicherheitsmarkierung unter jedem Typ von zirkular polarisiertem Licht reflektierten Lichts, um hierdurch das Dokument oder den Gegenstand zu authentifizieren.

## Revendications

1. Dispositif d'authentification destiné à l'authentification visuelle d'un document ou d'un article comprenant un marquage de sécurité à polarisation circulaire (M), ledit dispositif comprenant :
au moins une source de lumière (101 ; 201a, 201b), **caractérisé en ce que** soit
a) ledit dispositif comporte deux filtres à polarisation circulaire (102L, 102R) ayant des polarisations opposées et est utilisable pour produire simultanément deux faisceaux de lumière ayant des polarisations circulaires opposées pour former simultanément deux zones d'éclairement adjacentes (M1, M2) ayant des polarisations circulaires opposées sur le marquage de sécurité à polarisation circulaire (M), soit, en variante,
b) ledit dispositif comporte des moyens de polarisation pour produire une polarisation circulaire alternée opposée et est utilisable pour produire un seul faisceau de lumière ayant une polarisation circulaire alternée opposée pour former une zone d'éclairement avec une alternance de lumière à polarisation circulaire gauche et droite sur le marquage de sécurité à polarisation circulaire (M) ;
permettant ainsi à un utilisateur de juger visuellement, sans équipement supplémentaire, la lumière réfléchie par le marquage de chaque type de lumière polarisée circulairement pour authentifier le document ou l'article de sécurité, et dans lequel le dispositif d'authentification présente la forme d'un cylindre allongé ou d'une barre ayant une section transversale de l'ordre de 1 à 5 centimètres carrés.

2. Dispositif d'authentification selon la revendication 1, dans lequel la source de lumière est choisie dans le groupe constitué par des diodes électroluminescentes blanches et des diodes électroluminescentes colorées.

3. Dispositif d'authentification selon l'une des revendications 1 à 2, dans lequel une lentille positive (LE) ou une lentille de Fresnel (LE) est utilisée pour concentrer la lumière de la source de lumière sur le document ou l'article.

4. Dispositif d'authentification selon l'une quelconque des revendications 1 à 3, dans lequel l'intensité d'éclairement à une distance de travail sur le marquage (M) n'est pas inférieure à 50 Lux, et plus préférablement, n'est pas inférieure à 500 Lux.

5. Dispositif d'authentification selon l'une quelconque des revendications 1 à 4, dans lequel le dispositif d'authentification est constitué d'un matériau du groupe constitué par les matières plastiques, les aciers inoxydables, l'aluminium et les alliages d'aluminium.

6. Procédé d'authentification visuelle d'un document ou d'un article comprenant un marquage de sécurité à polarisation circulaire (M),
**caractérisé par** les étapes consistant à :
éclairer ledit marquage (M) sur ledit document ou l'article au moyen d'un dispositif selon l'une des revendications 1 à 5, émettant de la lumière polarisée circulairement gauche et droite, soit en émettant
a) simultanément deux faisceaux de lumière ayant des polarisations circulaires opposées pour former simultanément deux zones d'éclairement adjacentes (M1, M2) ayant des polarisations circulaires opposées sur le marquage de sécurité à polarisation circulaire (M) ; soit, en variante, en émettant
b) un seul faisceau de lumière ayant une polarisation circulaire alternative opposée pour former une zone d'éclairement présentant une alternance de lumière à polarisation circulaire gauche et droite sur le marquage de sécurité à polarisation circulaire (M) ; et juger visuellement, sans équipement supplémentaire, la lumière réfléchie par le marquage de chaque type de lumière polarisée circulairement, en authentifiant ainsi le document ou l'article de sécurité.
